# EUROPEAN PATENT APPLICATION

(11) **EP 4 518 081 A1**
(43) Date of publication of application: **05.03.2025**
(21) Application number: 23193652.7
(22) Date of filing: 28.08.2023
(51) Int. Cl.: H02J 7/00, B60L 53/67, B60L 53/80

(54) **BATTERY MANAGEMENT IN AN INDUSTRIAL SYSTEM**

(71) Applicant: Sandvik Mining and Construction Oy, 33330 Tampere (FI)
(72) Inventor: JASU, Jari, 20360 Turku (FI); SIIVONEN, Lauri, 33330 Tampere (FI); NURMI, Seppo, 20360 Turku (FI); SAHLMAN, Mika, 33330 Tampere (FI)
(74) Representative: Sandvik

(57) **Abstract**

Apparatuses, methods, computer programs and systems for battery management in an industrial system are disclosed. A battery management apparatus collects battery management information related to at least one set of swappable batteries for use in one or more industrial machines in an industrial system. At least one battery management instruction based on the collected battery management information is transmitted from the battery management apparatus. The battery management information comprises at least first location information of at least one available charged swappable battery in the at least one set of the swappable batteries. The at least one battery management instruction comprises at least the first location information.

## Description

### TECHNICAL FIELD

The present disclosure relates to the field of industrial systems, and, more particularly, to battery management in an industrial system.

### BACKGROUND

Battery-powered industrial machines, such as mining machines are a new and developing technology. At least some such battery-powered industrial machines may need battery swapping for continuous production once or a few times in the middle of a production shift.

In many other battery-powered applications, like cars, forklifts and mine headlights, the battery is charged usually at night or at idle time of the machine or equipment. The machine or equipment is unavailable when charging and the battery is not swapped.

On other applications where battery is swapped, such as hand tools, lawnmowers, etc., the charger is movable and the owner can decide where to place it, and/or each worker has a set of already charged batteries that are needed for work.

On the other hand, in battery-powered industrial machines utilizing battery swapping, when the battery needs charging it is swapped or replaced with a charged battery to be able to continue production. Basically, each machine may need at least two batteries for continuous production. When a mine, for example, has several battery-operated vehicles, there may be a challenge to keep track of where the batteries are located and what are their charge levels, conditions, etc., and where to find an available charger to get the battery charged.

Accordingly, at least in some situations, there may be a need for battery management in industrial systems.

### SUMMARY

An example embodiment of a battery management apparatus comprises at least one processor, and at least one memory including computer program code. The at least one memory and the computer program code are configured to, with the at least one processor, cause the battery management apparatus at least to collect battery management information related to at least one set of swappable batteries for use in one or more industrial machines in an industrial system. The at least one memory and the computer program code are further configured to, with the at least one processor, cause the battery management apparatus at least to transmit at least one battery management instruction based on the collected battery management information. The battery management information comprises at least first location information of at least one available charged swappable battery in the at least one set of the swappable batteries, and the at least one battery management instruction comprises at least the first location information.

An example embodiment of a method comprises: collecting, by a battery management apparatus, battery management information related to at least one set of swappable batteries for use in one or more industrial machines in an industrial system; and transmitting, from the battery management apparatus, at least one battery management instruction based on the collected battery management information. The battery management information comprises at least first location information of at least one available charged swappable battery in the at least one set of the swappable batteries, and the at least one battery management instruction comprises at least the first location information.

An example embodiment of a computer program comprises instructions for causing a battery management apparatus to perform at least the following: collecting battery management information related to at least one set of swappable batteries for use in one or more industrial machines in an industrial system; and transmitting at least one battery management instruction based on the collected battery management information. The battery management information comprises at least first location information of at least one available charged swappable battery in the at least one set of the swappable batteries, and the at least one battery management instruction comprises at least the first location information.

In an example embodiment, alternatively or in addition to the above-described example embodiments, the battery management information further comprises charge level information of at least one swappable battery in the at least one set of the swappable batteries.

In an example embodiment, alternatively or in addition to the above-described example embodiments, the transmitting of the at least one battery management instruction is performed in response to a received request.

In an example embodiment, alternatively or in addition to the above-described example embodiments, the at least one memory and the computer program code are further configured to, with the at least one processor, cause the battery management apparatus at least to: analyze at least the collected battery management information; and determine whether at least one battery management operation is needed based on the analysis. The transmitting of the at least one battery management instruction is performed in response to determining that the at least one battery management operation is needed.

In an example embodiment, alternatively or in addition to the above-described example embodiments, the battery management information further comprises charge level information of a swappable battery in use in an industrial machine of the one or more industrial machines; the determining of whether the at least one battery management operation is needed comprises determining that the swappable battery requires swapping due to a charge level below a first charge level threshold; and the at least one battery management instruction further comprises an instruction to proceed to swap the swappable battery with the charge level below the first charge level threshold for the at least one available charged swappable battery at a location indicated by the first location information.

In an example embodiment, alternatively or in addition to the above-described example embodiments, the at least one memory and the computer program code are further configured to, with the at least one processor, cause the battery management apparatus to collect auxiliary information comprising at least second location information for dropping a swappable battery with a charge level below the first charge level threshold.

In an example embodiment, alternatively or in addition to the above-described example embodiments, the auxiliary information further comprises at least one of: distance information of the industrial system, traffic situation information of the industrial system, traffic rule information of the industrial system, production situation information of the industrial system, electric supply capacity information of the industrial system, or information related to at least one charging station in the industrial system.

In an example embodiment, alternatively or in addition to the above-described example embodiments, the information related to the at least one charging station comprises at least one of availability information, alarm information or measurement information.

In an example embodiment, alternatively or in addition to the above-described example embodiments, the at least one memory and the computer program code are further configured to, with the at least one processor, cause the battery management apparatus to generate battery management optimization related information based at least partly on the auxiliary information; the at least one battery management operation further comprises at least one battery management optimization operation; and the at least one battery management instruction further comprises at least one battery management optimization instruction.

In an example embodiment, alternatively or in addition to the above-described example embodiments, the at least one memory and the computer program code are further configured to, with the at least one processor, cause the battery management apparatus to initiate a control operation related to the at least one charging station, based at least partly on the auxiliary information.

In an example embodiment, alternatively or in addition to the above-described example embodiments, the at least one battery management instruction further comprises at least one of: identification information for the at least one available charged swappable battery, or an instruction to activate a visual indicator arranged on the at least one available charged swappable battery.

An example embodiment of an industrial system comprises one or more industrial machines, at least one set of swappable batteries for use in the one or more industrial machines, at least one charging station, and a control system. The control system comprises the battery management apparatus according to any of the above-described example embodiments.

In an example embodiment, alternatively or in addition to the above-described example embodiments, the industrial system further comprises at least one user interface for interacting with the apparatus.

In an example embodiment, alternatively or in addition to the above-described example embodiments, the industrial system further comprises a wireless communications network comprising at least one wireless transceiver arranged in connection with a swappable battery of the at least one set of swappable batteries.

Many of the features will be more readily appreciated as they become better understood by reference to the following detailed description considered in connection with the accompanying drawings.

### DESCRIPTION OF THE DRAWINGS

The accompanying drawings, which are included to provide a further understanding of the embodiments and constitute a part of this specification, illustrate embodiments and together with the description help to explain the principles of the embodiments. In the drawings:
**FIG. 1** shows an example embodiment of an example system;
**FIG. 2** shows an example embodiment of an example battery management apparatus; and
**FIG. 3** shows an example embodiment of a method.

Like reference numerals are used to designate like parts in the accompanying drawings.

### DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

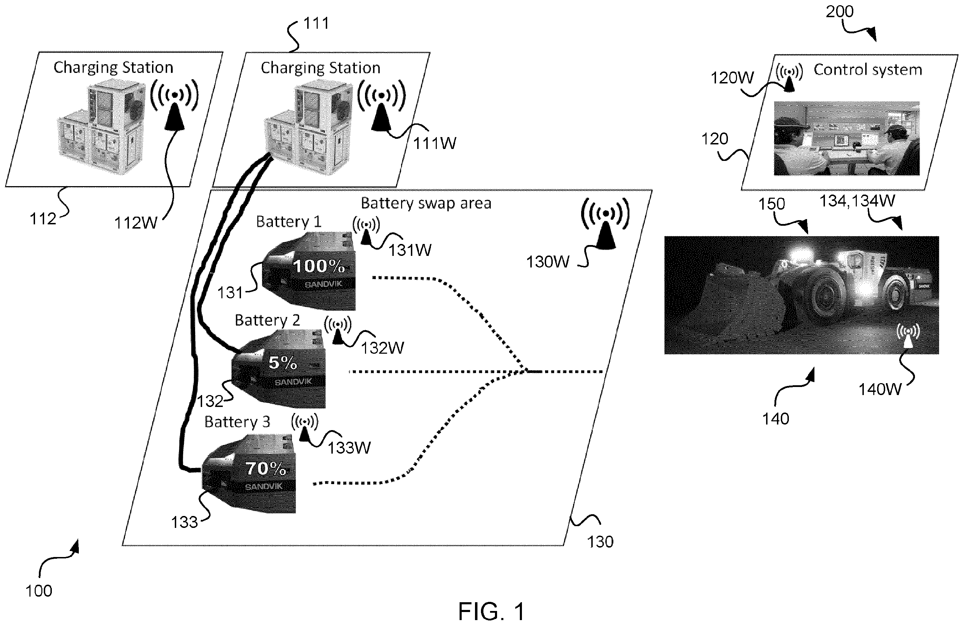

Fig. 1 illustrates an example industrial system 100, where various embodiments of the present disclosure may be implemented. The industrial system 100 comprises one or more industrial machines 140. An industrial machine 140 may include a mining machine or a construction machine, e.g., a rock drilling rig, a development drill, a tunneling drilling machine, a surface drilling machine, a bolting or reinforcing vehicle, a rock removal machine, a long hole drill rig, an explosive charging machine, a loader, a transport vehicle, a loading machine or a hauling machine, a setting vehicle of gallery arcs or nets, a concrete spraying machine, a crusher, a measuring vehicle, or a passenger transport vehicle.

The industrial system 100 further comprises at least one set of swappable batteries 131-134 for use in the one or more industrial machines 140. At least some of the batteries 131-134 may be located in a battery swap area 130. The industrial system 100 further comprises at least one charging station 111, 112. The battery swap area 130 may be arranged in connection with one or more of the charging stations 111, 112, to allow the batteries 131-133 located in the battery swap area 130 to be charged by the connected charging station 111. Although the industrial system 100 is depicted to include only one battery swap area 130 in Fig. 1, the industrial system 100 may include more battery swap areas. For example, there may be a battery swap area in connection with the charging station 112.

The industrial system 100 further comprises a control system 120. The control system 120 comprises a battery management apparatus 200 described in more detail below. The control system 120 may be connected to a further network(s) and system(s), such a worksite management system, a cloud service, an intermediate communications network, such as the internet, etc. The control system 120 may comprise or be connected to further device(s) or control unit(s), such as a handheld user unit, a vehicle unit, a worksite management device/system, a remote control and/or monitoring device/system, data analytics device/system, sensor system/device, etc. The control system 120 may be located in a control room, which may be arranged outside the industrial system 100. The control system 120 may include servers, computers or corresponding devices.

The industrial system 100 may further comprise at least one user interface 150 for interacting with the apparatus 200. The at least one user interface 150 may include an information screen (e.g., a touch screen) to allow users to get the needed information for battery management. For example, the user interface 150 may be used by an industrial system shift management or operator(s) to tell a machine operator where to leave a used battery and where the machine operator can find a charged battery and how to identify the correct charged battery. Alternatively, or additionally, the same information may be shown to the machine operator using, for example, a browser window on a tablet, a mobile phone, or a machine control system screen.

The at least one user interface 150 may further include a screen (e.g., a touch screen) for an operator to input battery location(s). For example, if a forklift operator moves a battery, he/she may click a known position object on an industrial system layout, or input coordinates.

The industrial system 100 may further comprise a wireless communications network comprising at least one wireless transceiver 131W-134W arranged in connection with a swappable battery of the at least one set of swappable batteries 131-134. The wireless communications network may further comprise, e.g., wireless transceivers 111W, 112W, 130W, 120W, and/or 140W arranged in connection with the charging station 111, charging station 112, the battery swap area 130, the control system 120, and the industrial machine 140, respectively.

For example, the industrial system 100 may comprise an underground industrial system, such as an underground mine or the like. An underground industrial system may be characterized by poor visibility due to darkness, as well as by confined spaces. Furthermore, the layout of an underground industrial system (such as a mine) may continually change as the mine keeps on being excavated. Accordingly, it is not possible for machine operators to be aware of current and precise locations of charged batteries. Thus, the disclosed battery management may be highly desirable in an underground industrial system.

In another example, the industrial system 100 may comprise an above-ground industrial system, such as a quarry or the like. The layout of an above-ground industrial system (e.g., an open-pit mine, such as a quarry) may also continually change as the open-pit mine keeps on being excavated. Accordingly, it is not possible for machine operators to be aware of current and precise locations of charged batteries. Thus, the disclosed battery management may be highly desirable in an above-ground industrial system.

Furthermore, in both underground and above-ground industrial systems the industrial machines 140 typically move slowly. Thus, at least in some situations, several charging stations may need to be distributed over the area of the industrial system so that routes to them are not too long (which would lead to unnecessary use of the batteries). Accordingly, the disclosed battery management may be highly desirable in order to be aware of which charging station is nearest or at the end of a shortest route at any given moment.

Furthermore, in both underground and above-ground industrial systems, even if, e.g., a machine operator were able to see a group of batteries within a distance, he/she could not know whether any of them were charged (they could be earlier dropped depleted batteries waiting to be charged again). Thus, the disclosed battery management may be highly desirable in order to efficiently and quickly find the nearest charged battery.

In the following, various example embodiments will be discussed. At least some of these example embodiments may allow battery management in the industrial system 100. Some of the features of the described units are optional features which may provide further advantages.

At least some of these example embodiments may allow decentralizing charging stations underground. This may be advantageous due to, e.g., space requirements, fire safety, electric supply and transformer capacity, and/or logistics (optimization of the distance from a production area to the charging stations for the fleet of machines).

At least some of these example embodiments may allow gathering information from batteries that are in use on machines, from batteries that are connected to charging stations, and/or from batteries that are neither on machines nor connected to charging stations. Furthermore, at least some of these example embodiments may allow collecting information about charging station status and controlling charging station operation remotely.

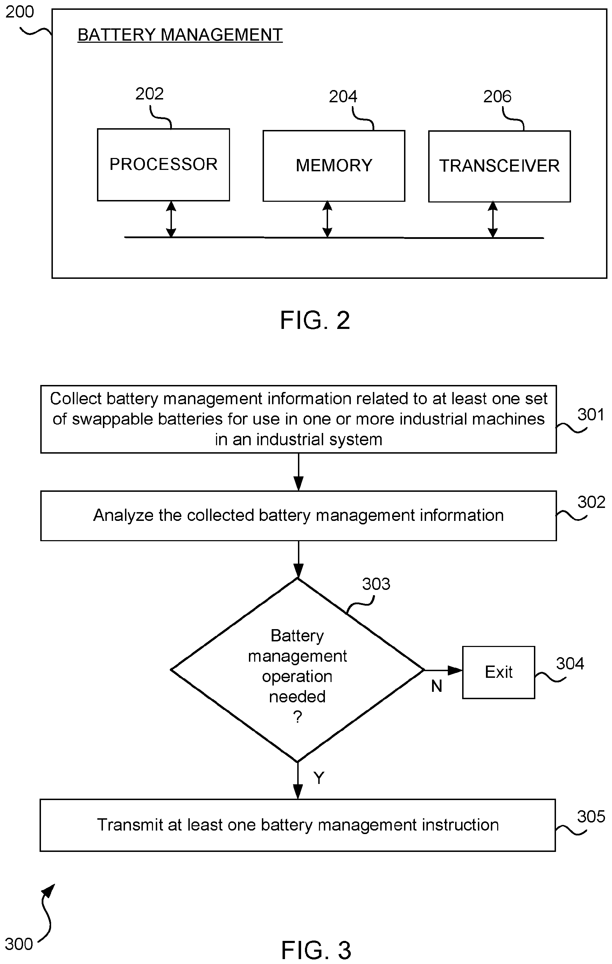

Fig. 2 is a block diagram of the battery management apparatus 200, in accordance with an example embodiment. The battery management apparatus 200 comprises one or more processors 202, and one or more memories 204 that comprise computer program code. The battery management apparatus 200 may further comprise a transceiver 206 configured to enable the battery management apparatus 200 to transmit and/or receive information to/from other devices, in a wireless and/or wired manner.

The battery management apparatus 200 may also include other elements not shown in Fig. 2, such as one or more human interface devices, such as a keyboard and/or a display, via which the battery management apparatus 200 may be configured to interact with a user.

Although the battery management apparatus 200 is depicted to include only one processor 202, the battery management apparatus 200 may include more processors. In an embodiment, the memory 204 is capable of storing instructions, such as an operating system and/or various applications. Furthermore, the memory 204 may include a storage that may be used to store, for example, at least some of the information and data used in the disclosed embodiments.

Furthermore, the processor 202 is capable of executing the stored instructions. In an embodiment, the processor 202 may be embodied as a multi-core processor, a single core processor, or a combination of one or more multi-core processors and one or more single core processors. For example, the processor 202 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, a neural network chip, an artificial intelligence (AI) accelerator, or the like. In an embodiment, the processor 202 may be configured to execute hard-coded functionality. In an embodiment, the processor 202 is embodied as an executor of software instructions, wherein the instructions may specifically configure the processor 202 to perform the algorithms and/or operations described herein when the instructions are executed.

The memory 204 may be embodied as one or more volatile memory devices, one or more non-volatile memory devices, and/or a combination of one or more volatile memory devices and non-volatile memory devices. For example, the memory 204 may be embodied as semiconductor memories (such as mask ROM, PROM (programmable ROM), EPROM (erasable PROM), flash ROM, RAM (random access memory), etc.).

The at least one memory 204 and the computer program code are configured to, with the at least one processor 202, cause the battery management apparatus 200 at least to collect battery management information related to at least one set of swappable batteries 131-134 for use in one or more industrial machines 140 in an industrial system 100.

The at least one memory 204 and the computer program code are further configured to, with the at least one processor 202, cause the battery management apparatus 200 at least to transmit at least one battery management instruction based on the collected battery management information.

The battery management information comprises at least first location information of at least one available charged swappable battery 131 in the at least one set of the swappable batteries 131-134, and the at least one battery management instruction comprises at least the first location information. The first location information may comprise, e.g., coordinates, such as two-dimensional coordinates (x, y) or three-dimensional coordinates (x, y, z). The coordinates may be those of a global coordinate system or a local coordinate system. Alternatively, the first location information may comprise one or more pointers to coordinates. Alternatively, or additionally, the first location information may comprise positioning system information, such as global positioning system (GPS) information. Alternatively, or additionally, the first location information may comprise heading information.

The battery management information may further comprise charge level information of at least one swappable battery in the at least one set of the swappable batteries 131-134. The charge level information may comprise, e.g., state of charge (SoC) or depth of discharge (DoD) information.

At least in some embodiments, the first location information may be stored in the battery management apparatus 200 and/or the respective batteries.

The transmitting of the at least one battery management instruction may be performed in response to a received request, e.g. from the industrial machine 140 or the interface 150.

The at least one memory 204 and the computer program code may be further configured to, with the at least one processor 202, cause the battery management apparatus 200 at least to analyze at least the collected battery management information, and determine whether at least one battery management operation is needed based on the analysis. The transmitting of the at least one battery management instruction may be performed in response to determining that the at least one battery management operation is needed.

The battery management information may further comprise charge level information of a swappable battery 134 in use in an industrial machine of the one or more industrial machines 140. Furthermore, the determining of whether the at least one battery management operation is needed may comprise determining that the swappable battery 134 requires swapping due to a charge level below a first charge level threshold. Furthermore, the at least one battery management instruction may further comprise an instruction to proceed to swap the swappable battery 134 with the charge level below the first charge level threshold for the at least one available charged swappable battery 131 at a location indicated by the first location information.

For example, the analyzing of the collected battery management information may involve comparing the collected charge level information of a battery in use with a first charge level threshold, and if the charge level is below the first charge level threshold, it may then be determined that a battery management operation is needed.

At least in some embodiments, the at least one memory 204 and the computer program code may be further configured to, with the at least one processor 202, cause the battery management apparatus 200 to collect auxiliary information comprising at least second location information for dropping a swappable battery with a charge level below the first charge level threshold. The second location information may comprise, e.g., coordinates, such as two-dimensional coordinates (x, y) or three-dimensional coordinates (x, y, z). The coordinates may be those of a global coordinate system or a local coordinate system. Alternatively, the second location information may comprise one or more pointers to coordinates. Alternatively, or additionally, the second location information may comprise positioning system information, such as GPS information.

The auxiliary information may further comprise: distance information of the industrial system 100, traffic situation information of the industrial system 100, traffic rule information of the industrial system 100, production situation information of the industrial system 100, electric supply capacity information of the industrial system 100, and/or information related to at least one charging station 111, 112 in the industrial system 100.

The information related to the at least one charging station 111, 112 may comprise availability information, alarm information and/or measurement information.

At least in some embodiments, the at least one memory 204 and the computer program code may be further configured to, with the at least one processor 202, cause the battery management apparatus 200 to generate battery management optimization related information based at least partly on the auxiliary information. Furthermore, the at least one battery management operation may further comprise at least one battery management optimization operation. Furthermore, the at least one battery management instruction may further comprise at least one battery management optimization instruction.

At least in some embodiments, the at least one memory 204 and the computer program code may be further configured to, with the at least one processor 202, cause the battery management apparatus 200 to initiate a control operation related to the at least one charging station 111, 112 based at least partly on the auxiliary information, thereby allowing remote control of the at least one charging station 111, 112.

For example, the remote control of the at least one charging station 111, 112 may include supervising and/or controlling the at least one charging station 111, 112 and/or its functionalities. This may include reading alarms and/or measurement values like temperatures, currents, and/or voltages. This may further include starting and/or stopping charging station functions like charging and cooling. This may further include controlling the charging capacity or efficiency to be able to prioritize charging of different batteries and charging stations as needed based on, e.g., a production situation the industrial system 100 and/or electric supply capacity in the industrial system 100. An example of the prioritizing need includes a situation in which a big energy consumer is started in the industrial system 100, such as a big drainage water pump. Then, an operator or the like in the industrial system 100 or a higher-level supervision system or the like may request at least some of the charging stations 111, 112 to limit the charging power. This may happen via the battery management apparatus 200 that may be configured to be aware of the priorities of the charging stations 111, 112 and adjusts them accordingly.

In other words, at least some of the disclosed embodiments may allow fully automatic battery and charging dispatching. The battery management apparatus 200 may decide when a battery swap is needed in one of the industrial machines 140. Then, a charging station with a charged battery may be determined. Information about the charging station with the charged battery may be forwarded to, e.g., a task management system configured to find a route to the charging station with the charged battery and guide the industrial machine 140 there. Such determination of the charging station with the charged battery and dispatching may be based on one or more parameters, including, e.g., distance, traffic situation and rules, a battery charge status, charger availability, production priorities, shift and shift change timing, etc.

The at least one battery management instruction may further comprise identification information for the at least one available charged swappable battery 131, and/or an instruction to activate a visual indicator arranged on the at least one available charged swappable battery 131.

For example, a system operator may, via the battery management apparatus 200 , remotely set an identification light on a battery to indicate to a manual operator or a remote operator which battery is ready to be taken. Alternatively, there may be some other visual markings like painted numbers on the batteries.

Fig. 3 illustrates an example flow chart of a method 300, in accordance with an example embodiment. In the example of Fig. 3, the method 300 comprises a computer-implemented method.

At operation 301, the battery management apparatus 200 collects battery management information related to the at least one set of swappable batteries 131-134 for use in the one or more industrial machines 140 in the industrial system 100.

At optional operation 302, the battery management apparatus 200 may analyze the collected battery management information, as discussed above in more detail.

At optional operation 303, the battery management apparatus 200 may determine whether at least one battery management operation is needed based on the analyzed battery management information. When it is determined that the at least one battery management operation is not needed, the method 300 may exit, operation 304. Alternatively, the method 300 may return to operation 301 (not shown in Fig. 3). When it is determined that the at least one battery management operation is needed, the method 300 may proceed to operation 305.

At operation 305, the battery management apparatus 200 transmits at least one battery management instruction based on the collected battery management information. The battery management information comprises at least first location information of at least one available charged swappable battery 131 in the at least one set of the swappable batteries 131-134, and the at least one battery management instruction comprises at least the first location information.

The method 300 may be performed by the battery management apparatus 200 of Fig. 2. The operations 301-305 can, for example, be performed by the at least one processor 202 and the at least one memory 204. Further features of the method 300 directly result from the functionalities and parameters of the battery management apparatus 200, and thus are not repeated here. The method 300 can be performed by computer program(s).

The battery management apparatus 200 may comprise means for performing at least one method described herein. In an example, the means may comprise the at least one processor 202, and the at least one memory 204 including program code configured to, when executed by the at least one processor 202, cause the battery management apparatus 200 to perform the method.

The functionality described herein can be performed, at least in part, by one or more computer program product components such as software components. According to an embodiment, the battery management apparatus 200 may comprise a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Application-Specific Integrated Circuits (ASICs), Application-Specific Standard Products (ASSPs), System-on-a-chip systems (SOCs), Complex Programmable Logic Devices (CPLDs), and Graphics Processing Units (GPUs).

Any range or device value given herein may be extended or altered without losing the effect sought. Further, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of example embodiments. Although various embodiments have been described above with a certain degree of particularity, or with reference to one or more individual embodiments, those skilled in the art could make numerous alterations to the disclosed embodiments without departing from the scope of this specification.

## Claims

1. A battery management apparatus (200), comprising:
at least one processor (202); and
at least one memory (204) including computer program code;
the at least one memory (204) and the computer program code configured to, with the at least one processor (202), cause the battery management apparatus (200) at least to:
collect battery management information related to at least one set of swappable batteries (131-134) for use in one or more industrial machines (140) in an industrial system (100); and
transmit at least one battery management instruction based on the collected battery management information,
wherein the battery management information comprises at least first location information of at least one available charged swappable battery (131) in the at least one set of the swappable batteries (131-134), and the at least one battery management instruction comprises at least said first location information.

2. The battery management apparatus (200) according to claim 1, wherein the battery management information further comprises charge level information of at least one swappable battery in the at least one set of the swappable batteries (131-134).

3. The battery management apparatus (200) according to claim 1 or 2, wherein the transmitting of the at least one battery management instruction is performed in response to a received request.

4. The battery management apparatus (200) according to any one of claims 1 to 3, wherein the at least one memory (204) and the computer program code are further configured to, with the at least one processor (202), cause the battery management apparatus (200) at least to:
analyze at least the collected battery management information; and
determine whether at least one battery management operation is needed based on the analysis,
wherein the transmitting of the at least one battery management instruction is performed in response to determining that the at least one battery management operation is needed.

5. The battery management apparatus (200) according to claim 4, wherein:
the battery management information further comprises charge level information of a swappable battery (134) in use in an industrial machine of the one or more industrial machines (140);
the determining of whether the at least one battery management operation is needed comprises determining that said swappable battery (134) requires swapping due to a charge level being below a first charge level threshold; and
the at least one battery management instruction further comprises an instruction to proceed to swap said swappable battery (134) with said charge level below said first charge level threshold for said at least one available charged swappable battery (131) at a location indicated by said first location information.

6. The battery management apparatus (200) according to any one of claims 1 to 5, wherein the at least one memory (204) and the computer program code are further configured to, with the at least one processor (202), cause the battery management apparatus (200) to collect auxiliary information comprising at least second location information for dropping a swappable battery with a charge level below a first charge level threshold.

7. The battery management apparatus (200) according to claim 6, wherein the auxiliary information further comprises at least one of: distance information of the industrial system (100), traffic situation information of the industrial system (100), traffic rule information of the industrial system (100), production situation information of the industrial system (100), electric supply capacity information of the industrial system (100), or information related to at least one charging station (111, 112) in the industrial system (100) .

8. The battery management apparatus (200) according to claim 7, wherein the information related to the at least one charging station (111, 112) comprises at least one of availability information, alarm information or measurement information.

9. The battery management apparatus (200) according to any one of claims 6 to 8, wherein:
the at least one memory (204) and the computer program code are further configured to, with the at least one processor (202), cause the battery management apparatus (200) to generate battery management optimization related information based at least partly on said auxiliary information;
the at least one battery management operation further comprises at least one battery management optimization operation; and
the at least one battery management instruction further comprises at least one battery management optimization instruction.

10. The battery management apparatus (200) according to any one of claims 6 to 9, wherein the at least one memory (204) and the computer program code are further configured to, with the at least one processor (202), cause the battery management apparatus (200) to initiate a control operation related to the at least one charging station (111, 112), based at least partly on said auxiliary information.

11. The battery management apparatus (200) according to any one of claims 1 to 10, wherein the at least one battery management instruction further comprises at least one of: identification information for said at least one available charged swappable battery (131), or an instruction to activate a visual indicator arranged on said at least one available charged swappable battery (131).

12. A method (300), comprising:
collecting (301), by a battery management apparatus (200), battery management information related to at least one set of swappable batteries (131-134) for use in one or more industrial machines (140) in an industrial system (100); and
transmitting (305), from the battery management apparatus (200), at least one battery management instruction based on the collected battery management information,
wherein the battery management information comprises at least first location information of at least one available charged swappable battery (131) in the at least one set of the swappable batteries (131-134), and the at least one battery management instruction comprises at least said first location information.

13. A computer program comprising instructions for causing a battery management apparatus to perform at least the following:
collecting battery management information related to at least one set of swappable batteries for use in one or more industrial machines in an industrial system; and
transmitting at least one battery management instruction based on the collected battery management information,
wherein the battery management information comprises at least first location information of at least one available charged swappable battery in the at least one set of the swappable batteries, and the at least one battery management instruction comprises at least said first location information.

14. An industrial system (100), comprising:
one or more industrial machines (140);
at least one set of swappable batteries (131-134) for use in the one or more industrial machines (140) ;
at least one charging station (111, 112); and
a control system (120),
wherein the control system (120) comprises the battery management apparatus (200) according to any one of claims 1 to 11.

15. The industrial system (100) according to claim 14, further comprising at least one user interface (150) for interacting with the apparatus (200).

16. The industrial system (100) according to claim 14 or 15, further comprising a wireless communications network comprising at least one wireless transceiver (131W-134W) arranged in connection with a swappable battery of the at least one set of swappable batteries (131-134).
